# EUROPÄISCHE PATENTSCHRIFT

(11) **EP 2 596 898 B1**
(45) Veröffentlichungstag und Bekanntmachung des Hinweises auf die Patenterteilung: **01.10.2014**
(21) Anmeldenummer: 11190718.4
(22) Anmeldetag: 25.11.2011
(51) Int. Cl.: B23K 20/12, B23K 37/04

(54) **Selbstspannendes Reibschweißwerkzeug**
Friction welding tool with a self-clamping device
Outil de soudage par friction autobloquant

(43) Veröffentlichungstag der Anmeldung: 29.05.2013
(73) Patentinhaber: Helmholtz-Zentrum Geesthacht Zentrum für Material- und Küstenforschung GmbH, 21502 Geesthacht (DE)
(72) Erfinder: Roos, Arne, 21035 Hamburg (DE); Fritz, Jan, 21031 Hamburg (DE); Bergmann, Luciano, 21502 Geesthacht (DE); dos Santos, Jorge F., 21395 Tespe ( Avendorf ) (DE)
(74) Vertreter: UEXKÜLL & STOLBERG

(56) Entgegenhaltungen:
- EP-A1- 1 690 628
- JP-A- 2008 036 664
- US-A- 5 713 507
- US-A1- 2005 045 695
- US-A1- 2006 124 691
- US-A1- 2006 169 741
- US-A1- 2006 289 604

## Beschreibung

Die vorliegende Erfindung betrifft ein selbstspannendes Reibschweißwerkzeug mit einem Stift, der ein Kopplungsende und ein dem Kopplungsende gegenüberliegendes Eingriffsende aufweist und der vorgesehen ist, um eine Drehbewegung um seine zwischen dem Kopplungsende und dem Eingriffsende verlaufende Längsachse auszuführen und dabei mit seinem Eingriffsende mit der Oberfläche einer Werkstückanordnung einzugreifen, und mit einer Klemmvorrichtung, die den Stift umgibt, entlang der Längsachse des Stiftes beweglich ist und vorgesehen ist, um Druck auf die Oberfläche der Werkstückanordnung auszuüben.

Allgemein werden beim Reibschweißen zwei aneinander anliegende Werkstücke relativ zueinander bewegt, wobei es durch die entstehende Reibung zur Erwärmung und Plastifizierung des Materials der Werkstücke in der Reibzone kommt. Werden nun die zwei Werkstücke aneinander angelegt bzw. angepresst, so verbindet sich das plastifizierte Material der beiden Werkstücke in dem Anlagebereich. Vorteile des Reibschweißens sind vor allem, dass eine Vielzahl unterschiedlicher Werkstoffe miteinander verbunden werden kann und dass der Bereich der Werkstücke, der durch den Schweißprozess beeinflusst wird, relativ klein ist und vergleichweise niedrigen Temperaturen ausgesetzt ist.

Ausgehend von diesem Grundprinzip sind Abwandlungen des Reibschweißens entwickelt worden. Beim Reibrührschweißen beispielsweise wird Reibungsenergie durch ein verschleißfestes, rotierendes Werkzeug erzeugt, das sich entlang oder in der Nähe der Anlagefläche zweier zu verbindender Werkstücke durch das Material dieser bewegt, wodurch das Material entlang bzw. in der Umgebung des Bewegungspfades des Werkzeugs plastifiziert wird, was wiederum die Verbindung der beiden Werkstücke in diesem Bereich ermöglicht.

Aus dem Stand der Technik, wie beispielsweise der WO 01/28732 A1, ist eine Reibschweißeinrichtung bekannt, die einen um seine Längsachse drehend angetriebenen Stift mit einem Kopplungsende und einem dem Kopplungsende gegenüberliegendes Eingriffsende aufweist, wobei das Kopplungsende fest mit dem Abtrieb der Reibschweißeinrichtung verbunden ist und das Eingriffsende vorgesehen ist, um mit der Oberfläche zweier aneinander angelegter Werkstücke einzugreifen und in deren Material einzudringen. Aus dieser Schrift ist ferner bekannt, eine Klemmvorrichtung an der Reibschweißeinrichtung vorzusehen, die den Stift umgibt und entlang der Längsachse des Stiftes gegenüber diesem bewegt werden kann, um Druck auf die Werkstücke auszuüben. Die Klemmvorrichtung ist am Maschinenrahmen der Reibschweißeinrichtung angebracht und kann somit unabhängig von dem Stift bewegt werden.

Nachteilhaft bei einer solchen Reibschweißeinrichtung nach dem Stand der Technik ist jedoch, dass diese nicht in anderer Weise als Werkzeugmaschine, beispielsweise zum Bohren oder Fräsen, eingesetzt werden kann, da zumindest die Klemmvorrichtung fester Bestandteil der Werkzeugmaschine ist und nicht von dieser gelöst werden kann. Andererseits ist eine Klemmvorrichtung aber unerlässlich, da die Werkstücke sich sonst während des Schweißvorgangs gegeneinander verschieben oder unerwünschte Spalten bilden könnten.

Aus der US 2006/0169741 A1, die dem Oberbegriff vom Anspruch 1 zugrundeliegt, ist eine Reibschweißmaschine mit einer drehend angetriebenen Spindel bekannt, die in einem Spindelgehäuse angeordnet ist, welches mit dem übrigen Gehäuse der Reibschweißmaschine verschraubt ist. An ihrem freien Ende weist die Spindel eine Werkzeugaufnahme auf, in die ein Reibschweißwerkzeug aufgenommen ist. Das Reibschweißwerkzeug weist an seinem von der Spindel weg weisenden Ende einen Schweißstift auf, dessen untere Oberfläche zum Einbringen einer Punktschweißverbindung an einem Werkstück mit der äußeren Oberfläche des Werkstücks eingreift, wobei die Spindel und mit der Spindel das Reibschweißwerkzeug rotiert. Zum Festklemmen des Werkstücks während des Einbringens der Punktschweißverbindung weist die Reibschweißmaschine eine Klemmvorrichtung auf. Die Klemmvorrichtung weist ein Niederhalterelement auf, welches das Reibschweißwerkzeug umgibt und eine Klemmfläche aufweist, mit welcher Druck auf die äußere Oberfläche des Werkstücks ausgeübt werden kann. Das Niederhalterelement ist gegenüber dem Reibschweißwerkzeug entlang der Rotationsachse der Spindel längs verschiebbar über Federelemente an einem Gegenlager des Spindelgehäuses abgestützt.

Ausgehend vom Stand der Technik ist es daher die Aufgabe der vorliegenden Erfindung, ein Reibschweißwerkzeug bereitzustellen, das eine Klemmvorrichtung aufweist und an eine Werkzeugmaschine mit einer drehend angetriebenen Abtriebseinrichtung, beispielsweise einer Abtriebswelle, angekoppelt werden kann bzw. zwischen einer Vielzahl von Werkzeugmaschinen einfach und bequem austauschbar ist.

Diese Aufgabe wird dadurch gelöst, dass die Klemmvorrichtung ein Gegenlager aufweist, das zwischen dem Kopplungsende und dem Eingriffsende frei drehbar um die Längsachse des Stiftes und in Richtung der Längsachse unverschiebbar an dem Stift gehaltert ist, dass die Klemmvorrichtung ein den Stift umgebendes, auf der zu dem Eingriffsende weisenden Seite des Gegenlagers angeordnetes Niederhalterelement mit einer Anlagefläche aufweist, die zur Anlage an die Werkstückanordnung vorgesehen ist, dass zwischen Niederhalterelement und dem Gegenlager ein Federelement vorgesehen ist, sodass das Niederhalterelement elastisch verschiebbar entlang der Längsachse des Stiftes an dem Stift gelagert ist und dass der Stift an seinem Kopplungsende einen Kopplungsabschnitt zur lösbaren drehfesten Kopplung an eine drehende Abtriebswelle einer Werkzeugmaschine aufweist.

Auf diese Weise wird ein Reibschweißwerkzeug bereitgestellt, dessen Klemmvorrichtung ausschließlich an dem Stift gehaltert und elastisch abgestützt ist, sodass Stift und Klemmvorrichtung als ein gemeinsames System durch einfaches Ankoppeln des Kopplungsabschnitts des Stiftes an die Abtriebswelle einer Werkzeugmaschine mit verschiedenen Werkzeugmaschinen verbunden werden bzw. von verschiedenen Werkzeugmaschinen betrieben werden kann.

In diesem Zusammenhang ist unter einem Federelement im Sinne der vorliegenden Erfindung allgemein ein elastisch verformbares Element zu verstehen, das einer Verformung in Richtung der Längsachse eine Kraft entgegensetzt, wobei der Zusammenhang zwischen der Verformung und der Kraft nicht notwendig linear sein muss. Damit muss das Federelement nicht notwendiger Weise als Schraubenfeder oder dgl. ausgebildet sein.

Beim Betrieb des Reibschweißwerkzeugs zum Herstellen einer Schweißverbindung wird das Kopplungsende des Stifts in das Futter einer herkömmlichen Bohr- oder Fräsmaschine oder in ein Futter an der Abtriebswelle eines herkömmlichen Roboters eingespannt. Dann wird die jeweilige Abtriebswelle bzw. die Abtriebseinrichtung derart verfahren, dass zunächst die Anlagefläche des Niederhalterelements an der Oberfläche der Werkstückanordnung der zu verbindenden Werkstücke anliegt.

Anschließend wird der Stift in Rotation versetzt und hin zu der Oberfläche der Werkstückanordnung bewegt, wodurch das zwischen Gegenlager und Niederhalterelement angeordnete Federelement vorgespannt wird. Die Vorspannkraft des Federelements wiederum wird über das Niederhalterelement an die Oberfläche der Werkstückanordnung weitergeleitet, wodurch die einzelnen Werkstücke der Werkstückanordnung zusammengeklemmt werden und nicht verrutschen können, wenn der Stift bei einer weiteren Bewegung auf die Oberfläche zu schließlich mit den Werkstücken eingreift.

Unter Eingriff mit der Oberfläche der Werkstückanordnung wird erfindungsgemäß sowohl das Reiben des Stiftes auf der Oberfläche der Werkstücke als auch das Eindringen des Stiftes in das Material der Werkstücke unter deren Oberfläche verstanden.

Des Weiteren werden unter dem Begriff einer Werkstückanordnung im Sinne der vorliegenden Erfindung eines oder mehrere Werkstücke verstanden. Dabei können u.a. zwei der mehreren Werkstücke derart aneinander angelegt sein, dass sie teilweise überlappen, wobei der Stift des Reibschweißwerkzeugs an der Oberfläche des obersten, zu dem Stift weisenden Werkstücks reibt oder in die Oberfläche eindringt und dadurch den darunterliegenden Bereich der Werkstücke zumindest teilweise plastifiziert. In diesem Fall liegt die Anlagefläche des Niederhalterelements nur an einem Werkstück an. Es ist aber auch von dem Begriff Werkstückanordnung umfasst, dass Werkstücke in einer einen Stumpfstoß bildenden Weise aneinandergelegt werden und der Stift des Reibschweißwerkzeugs parallel zu dieser Kontaktfläche der beiden Werkstücke in deren Material bewegt wird oder an deren Oberfläche reibt, sodass der Bereich der Werkstücke entlang der Kontaktfläche der beiden Werkstücke plastifiziert wird. Hier liegt die Anlagefläche des Niederhalterelements dann an mehreren Werkstücken gleichzeitig an.

Das erfindungsgemäße Reibschweißwerkzeug ist geeignet, um Punktschweißverbindungen, d.h. Schweißverbindungen an diskreten Stellen herzustellen. Zum Beispiel kann es gewünscht sein, zwei Werkstücke nur mit Punktschweißverbindungen zu verbinden, um den Schweißprozess zu beschleunigen oder die Wärmeeinflusszone möglichst klein zu halten.

Das erfindungsgemäße Reibschweißwerkzeug kann - an dem Kopplungsabschnitt des Stiftes - mit beliebigen verschiedenen Werkzeugmaschinen verbunden werden, einschließlich Bearbeitungszentren, Bohr-, Fräsmaschinen und auch Handwerkzeugen. So ist es denkbar, dass es in das Futter einer Handbohrmaschine oder einer Oberfräse eingespannt wird. Diese Möglichkeiten ergeben sich aufgrund der unmittelbar an dem Stift gehalterten Klemmvorrichtung.

In einer bevorzugten Ausführungsform weist das Eingriffsende eine senkrecht zur Längsachse des Stifts verlaufende Reibfläche auf. Diese Reibfläche ist vorgesehen, um beispielsweise bei Anwendung des "Self Clamping Hybrid Friction Diffusion Bonding" (SCHFDB) rotierend an der Oberfläche der Werkstückanordnung zu reiben. Dabei kann die Reibfläche bevorzugter Weise eine Struktur aufweisen, die eine effektivere Reibung ermöglicht, d.h. die Plastifizierung des Materials der Werkstückanordnung beschleunigt.

In einer weiteren bevorzugten Ausführungsform weist das Eingriffsende des Stifts einen sich in Richtung seiner Längsachse erstreckenden Reibstift auf, der in die Oberfläche eines Werkstücks eindringen kann. Dabei ist es besonders bevorzugt, wenn das Eingriffsende des Stifts eine in Richtung der Längsachse verlaufende Bohrung aufweist und der Reibstift in der Bohrung verschiebbar aufgenommen ist, sodass die Länge, mit welcher der Reibstift über das Eingriffsende des Stiftes hinausragt, und somit die Tiefe, bis zu der der Reibstift in die Oberfläche der Werkstückanordnung eindringt, eingestellt werden kann.

Besonders bevorzugt ist es ferner, wenn der Stift eine quer zur Längsachse verlaufende Gewindebohrung aufweist, die in die Bohrung mündet und in die eine Feststellschraube eingeschraubt ist, mit der der Reibstift in Bezug auf seine Winkellage gegenüber dem Stift fixiert werden kann. Ebenfalls bevorzugt ist es, wenn der Stift eine in Richtung der Längsachse verlaufende, von dem Kopplungsende ausgehende und in die Bohrung mündende Verstellgewindebohrung aufweist, in die eine Verstellschraube eingeschraubt ist. Die Verstellschraube dient dann als verstellbarer Anschlag bei der Einstellung des Maßes, um das der Reibstift in die Oberfläche der Werkstückanordnung eindringt.

Der in einer bevorzugten Ausführungsform am Eingriffsende des Stifts vorgesehene Reibstift ist geeignet, um bei Ausführung eines Reibrührschweißverfahrens - z.B. des "Self Clamping Friction Stir Spot Welding" (SCFSSW) - unter die Oberfläche der Werkstückanordnung in das Material des Werkstücks bzw. der Werkstücke einzudringen, während er durch seine Rotation das umliegende Material der Werkstücke plastifiziert. Der Reibstift kann entlang seiner Mantelfläche eine strukturierte Oberfläche aufweisen, die eine effektivere Reibung ermöglicht, d.h. die Plastifizierung des Materials der Werkstücke beschleunigt. Bevorzugter Weise kann dabei die Position des Reibstifts in der Bohrung mit Hilfe der zuvor erwähnten Verstellschraube verstellt und mittels der Feststellschraube fixiert werden. Dabei ragt der Reibstift so weit über das Eingriffsende des Stiftes aus der Bohrung hinaus, wie er in das Material der Werkstücke eindringen soll. Ist diese maximale Eindringtiefe erreicht, so schlägt der Stift mit dem Eingriffsende an der Oberfläche der Werkstückanordnung an und verhindert ein weiteres Eindringen.

Das Federelement ist in einer bevorzugten Ausführungsform in einfacher Weise als Schraubenfeder ausgebildet, wobei dann über die Dimensionierung der Feder die von dem Niederhalterelement auf die Werkstückanordnung ausgeübte Anpresskraft festgelegt werden kann. Es ist aber auch denkbar, dass das Federelement als ein Ring aus elastischem Material ausgebildet ist. Sowohl Schraubenfeder als auch der Ring aus elastischem Material können rings um den Stift angeordnet sein, d.h. der Stift durchdringt den von Schraubenfeder und Ring umschlossenen Hohlraum. Die Schraubenfeder weist im Wesentlichen linear elastische Eigenschaften, d.h. eine konstante Federsteifigkeit in Bezug auf ihre Verformung, auf, während die Federsteifigkeit des Ringes aus elastischem Material zwar ebenfalls konstant sein kann, sich jedoch auch mit zunehmender Verformung des Rings ändern kann.

In einer anderen bevorzugten Ausführungsform weist das Federelement ein ringförmiges Volumen auf, dessen Abmessung in Richtung der Längsachse veränderbar ist und mit einem Fluid gefüllt ist, wobei das Volumen mit einer steuerbaren Druckquelle in Fluidverbindung steht. Das Federelement bzw. dessen Steifigkeit wird also mittels einer steuerbaren hydraulischen, pneumatischen oder hydropneumatischen Pumpe festgelegt, in dem der Fluiddruck, d.h. der Flüssigkeits- und/oder Gasdruck in dem Federelement mit Hilfe der Pumpe in Reaktion auf bestimmte Vorgaben eingestellt wird. Die Steifigkeit kann zum Beispiel verringert werden, je weiter der Reibstift in das Material eindringt oder je weniger Drehmoment an dem Stift anliegt, um den Druck, den die Klemmvorrichtung auf die Werkstückanordnung aufbringt, z.B. an die Schubkräfte zwischen den einzelnen Werkstücken anzupassen. Auf diese Weise kann in allen Stadien des Schweißprozesses ein Verrutschen der Werkstücke gegeneinander verhindert werden.

Der Stift weist in einer bevorzugten Ausführungsform einen radialen umlaufenden Vorsprung auf, und das Gegenlager weist ein Lagergehäuse mit einer radialen umlaufenden Aussparung auf, wobei die Aussparung mit dem Vorsprung des Stiftes eingreift, sodass eine freie Drehbewegung des Stiftes um dessen Längsachse gegenüber dem Gegenlager möglich ist und eine axiale Bewegung des Stiftes entlang dessen Längsachse gegenüber dem Gegenlager verhindert wird. Dabei ist es besonders bevorzugt, wenn das Federelement zwischen dem Niederhalterelement und dem Lagergehäuse vorgesehen ist und das Gegenlager eine Linearführung aufweist, die mit dem Niederhalterelement eingreift, sodass das Niederhalterelement entlang der Längsachse des Stiftes gegenüber dem Gegenlager geführt verschiebbar ist.

Besonders bevorzugt ist es ferner, wenn zwischen dem Vorsprung des Stiftes und dem Lagergehäuse Lagerelemente vorgesehen sind, die Reibung zwischen Stift und Lagergehäuse reduzieren.

Das Federelement wird also vorgespannt, wenn das Niederhalterelement entlang der Linearführung in Richtung der Längsachse des Stifts gegenüber dem Gegenlager bewegt wird. Die Lagerelemente zwischen Vorsprung des Stifts und Lagergehäuse sind vorzugsweise als Wälz- oder Gleitlager ausgebildet. Sie erleichtern und stabilisieren die Bewegung des Stiftes um seine Längsachse gegenüber dem Gegenlager und legen die Position des Stiftes in Richtung seiner Längsachse gegenüber dem Gegenlager fest.

Bevorzugter Weise haben sowohl der Stift als auch die Klemmvorrichtung, d.h. das Gegenlager und das Niederhalterelement, einen im Wesentlichen rotationssymmetrischen Querschnitt bezüglich der Längsachse des Stifts. Außerdem ist es bevorzugt, wenn Stift, Federelement, Niederhalterelement und Gegenlager derart zueinander angeordnet sind, dass das Federelement den Stift konzentrisch umgibt sowie Niederhalterelement und/oder Gegenlager das Federelement konzentrisch umgeben.

In einer bevorzugten Ausführungsform weist die Anlagefläche des Niederhalterelements eine konzentrisch um die Längsachse des Stiftes angeordnete Vertiefung zur Aufnahme von plastifiziertem Material auf. In diese Vertiefung kann das vom Stift bzw. Reibstift bei dem Eingriff mit der Oberfläche der Werkstückanordnung möglicherweise verdrängte plastifizierte Material aufgenommen werden, ohne dass das Niederhalterelement von diesem Material von der Oberfläche der Werkstückanordnung weggedrückt wird. Außerdem wird dem plastifizierten Material auf diese Weise eine geordnete vorgegebene Form gegeben, die die Schweißpunkte kennzeichnet.

In einer weiteren bevorzugten Ausführungsform ist zwischen Stift und Niederhalterelement formschlüssig in Bezug auf die Ebene senkrecht zur Längsachse des Stiftes an diesen anliegend ein Abstreifelement, vorzugsweise ein Keramikelement, angeordnet. Das Abstreifelement ist vorgesehen, um beim Entfernen des Stiftes von der Oberfläche der Werkstückanordnung an dem Stift haftendes plastifiziertes Material der Werkstücke von dem Stift abzustreifen, d.h. zu entfernen und ggf. in die Vertiefung des Niederhalters zu lenken. Zusätzlich dient das Abstreifelement auch als Dichtung gegen ein Eindringen von plastifiziertem Material ins Innere des Werkzeugs während des Fügeprozesses.

In bevorzugter Weise ist der Stift im entspannten Zustand des Federelements derart gegenüber der Klemmvorrichtung angeordnet, dass das Eingriffsende in Richtung des Kopplungsendes versetzt gegenüber der Ebene angeordnet ist, in welcher die Anlagefläche liegt. Auf diese Weise wird sichergestellt, dass das Niederhalterelement bereits mit einer gewissen Kraft auf die Oberfläche der Werkstückanordnung drückt, um diese festzuklemmen, wenn der Stift die Oberfläche der Werkstückanordnung berührt, um mit dieser einzugreifen. Die Größe dieses Versatzes muss auf die erforderliche Klemmkraft bzw. die Federsteifigkeit abgestimmt werden.

Die vorliegende Erfindung wird im Folgenden anhand einer lediglich bevorzugte Ausführungsbeispiele der vorliegenden Erfindung darstellenden Zeichnung erläutert. Die Zeichnung zeigt in
- Fig. 1: einen Schnitt entlang der Längsachse des Stiftes eines ersten Ausführungsbeispiels eines erfindungsgemäßen Reibschweißwerkzeugs,
- Fig. 2: eine Seitenansicht des Ausführungsbeispiels aus Fig. 1,
- Fig. 3: eine Draufsicht in Richtung der Längsachse des Stiftes auf das Ausführungsbeispiel aus Fig. 1,
- Fig. 4: eine perspektivische Ansicht des Ausführungsbeispiels aus Fig. 1,
- Fig. 5: einen Schnitt entlang der Längsachse des Stiftes eines zweiten Ausführungsbeispiels der vorliegenden Erfindung und
- Fig. 6: einen Schnitt entlang der Längsachse des Stiftes eines dritten Ausführungsbeispiels der vorliegenden Erfindung.

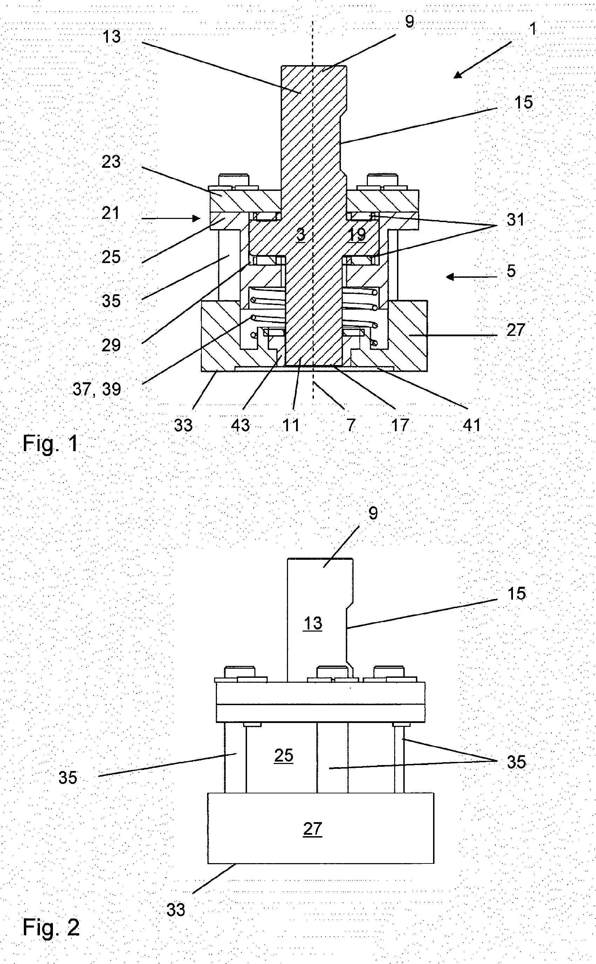

In den Fig. 1 bis 4 ist ein erstes Ausführungsbeispiel eines erfindungsgemäßen Reibschweißwerkzeugs 1 dargestellt. Das Reibschweißwerkzeug 1 weist einen Stift 3 und eine daran drehbeweglich gehalterte Klemmvorrichtung 5 auf.

Der Stift 3 ist im Wesentlichen rotationssymmetrisch bezüglich seiner Längsachse 7 und weist ein Kopplungsende 9 und ein dem Kopplungsende 9 gegenüberliegendes Eingriffsende 11 auf. An seinem Kopplungsende 9 weist der Stift 3 einen Kopplungsabschnitt 13 auf, der zur lösbaren Kopplung an eine drehende Abtriebseinrichtung einer Werkzeugmaschine, beispielsweise das an einer Abtriebswelle angebrachte Futter, vorgesehen ist. Solch eine Werkzeugmaschine kann z.B. ein Bearbeitungszentrum, eine Bohrmaschine, eine Fräsmaschine oder ein Handwerkzeug sein. Dazu ist in dem Kopplungsabschnitt 13 der hier dargestellten bevorzugten Ausführungsbeispiele eine Eingriffsaussparung 15 in der Umfangsfläche vorgesehen, die dazu dient, eine drehfeste Verbindung mit der Abtriebseinrichtung, also beispielsweise dem Futter, zu ermöglichen.

Das Eingriffsende 11 des Stiftes 3 ist vorgesehen, um mit der Oberfläche einer nicht dargestellten Werkstückanordnung aus einem oder mehreren ggf. unmittelbar über- oder nebeneinander liegenden Werkstücken einzugreifen.

Bei dem ersten Ausführungsbeispiel hat der Stift 3 an seinem Eingriffsende 11 eine senkrecht zur Längsachse 7 liegende Reibfläche 17 (siehe Fig. 1), die vorgesehen ist, um auf der Oberfläche der Werkstückanordnung zu reiben und das darunterliegende Material zumindest des obersten der Werkstücke der Werkstückanordnung wenigstens teilweise zu plastifizieren. Dazu ist es bevorzugt, wenn die Reibfläche 17 eine Struktur aufweist, beispielsweise radial verlaufende Vorsprünge, die eine effektivere Reibung ermöglicht, d.h. die Plastifizierung des Materials der Werkstückanordnung verstärkt und beschleunigt.

Der Stift 3 weist ferner einen sich in radialer Richtung bezüglich der Längsachse 7 erstreckenden umlaufenden Vorsprung 19 auf, der vorgesehen ist, um mit einem Gegenlager 21 der Klemmvorrichtung 5 einzugreifen.

Die Klemmvorrichtung 5 umfasst neben dem Gegenlager 21, das eine obere Scheibe 23 und ein Lagergehäuse 25 aufweist, noch ein Niederhalterelement 27.

Das Lagergehäuse 25 des Gegenlagers 21 weist eine in radialer Richtung der Längsachse 7 des Stiftes 3 angeordnete umlaufende Aussparung 29 auf, die vorgesehen ist, um mit dem Vorsprung 19 des Stiftes 3 einzugreifen, sodass das Gegenlager 21 aus oberer Scheibe 23 und Lagergehäuse 25 der Klemmvorrichtung 5 gegenüber dem Stift 3 frei um dessen Längsachse 7 verdreht werden kann, aber in Richtung dessen Längsachse 7 unverschiebbar an diesem gehaltert ist.

Zwischen dem Vorsprung 19 des Stiftes 3 und dem Lagergehäuse 25 sind dazu Lagerelemente 31, vorzugsweise Wälz- oder Geleitlager, vorgesehen. Diese Lagerelemente 31 erleichtern und stabilisieren die Bewegung des Vorsprungs 19 gegenüber dem Lagergehäuse 25 und somit die Verdrehung des Stiftes 3 gegenüber der Klemmvorrichtung 5. Eine Bewegung des Stiftes 3 in Richtung seiner Längsachse 7 gegenüber dem Gegenlager 21 ist durch den Eingriff des Vorsprungs 19 mit dem Lagergehäuse 25 und der oberen Scheibe 23 verhindert, wobei die Lagerelemente 31 ein Spiel des Vorsprungs 19 gegenüber dem Lagergehäuse 25 unterbinden.

Das Niederhalterlement 27, das auf der zum Eingriffsende 11 des Stiftes 3 weisenden Seite des Gegenlagers 21 angeordnet ist, ist vorgesehen, um Druck auf eine Werkstückanordnung auszuüben, und weist auf der in Richtung des Eingriffsendes 11 des Stiftes 3 weisenden Seite eine Anlagefläche 33 auf, die zur Anlage an die Oberfläche einer Werkstückanordnung vorgesehen ist.

Das Gegenlager 21 weist eine axial bezüglich der Längsachse 7 des Stiftes 3 ausgerichtete Linearführung in Form von verschiebbar an Lagergehäuse 25 und oberer Scheibe 23 angebrachten und sich parallel zur Längsachse 7 des Stifts erstreckenden Führungsstiften 35 auf, die wiederum fest am Niederhalterelement 27 angebracht sind, sodass das Niederhalterelement 35 entlang der Längsachse 7 des Stiftes 3 gegenüber dem Gegenlager 21 bzw. dem Lagergehäuse 25 und der oberen Scheibe 23 geführt verschoben werden kann (siehe Fig. 2). Gleichzeitig wird durch die die Linearführung bildenden Führungsstifte 35 jede Bewegung des Niederhalterelements 27 verhindert, die nicht in Richtung der Längsachse 7 des Stiftes 3 gerichtet ist.

Zwischen dem Niederhalterelement 27 und dem Gegenlager 21 bzw. dem Lagergehäuse 21 ist ein Federelement 37 angeordnet, das vorgespannt wird, wenn das Niederhalterelement 27 entlang der Linearführung 45 gegenüber dem Gegenlager 21 hin zu diesem verschoben wird.

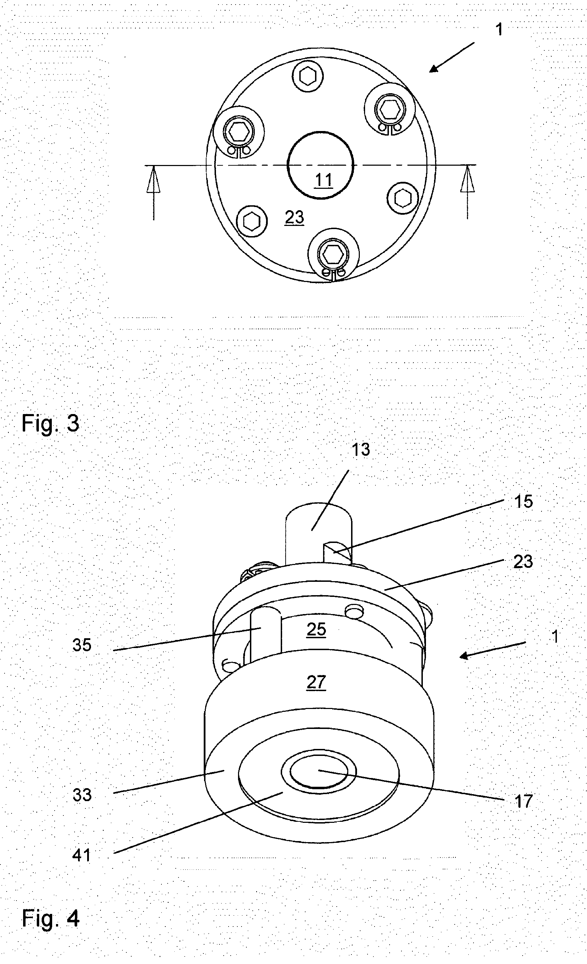

Wie die Figuren zeigen, ist auch die Klemmvorrichtung 5 im Wesentlichen rotationssymmetrisch bezüglich der Längsachse 7 des Stiftes 3 ausgestaltet (siehe Fig. 3), wobei der Stift 3 von dem Federelement 37 umgeben wird und das Federelement 37 von dem Niederhalterelement 27 und/oder dem Gegenlager 21 umgeben wird (Fig. 1).

Die Anlagefläche 33 des Niederhalterelements 27 weist konzentrisch um die Längsachse 7 des Stiftes 3 eine ringförmige Vertiefung 41 auf, die vorgesehen ist, um plastifiziertes Material, das durch den Eingriff des Stiftes 3 mit der Oberfläche der Werkstückanordnung aufgeworfen wird, aufzunehmen und in eine vorgegebene Form zu bringen (siehe Fig. 4), die die Eingriffsstellen an der Oberfläche der Werkstückanordnung kennzeichnet.

Weiterhin ist zwischen dem Stift 3 und dem Niederhalterelement 27 formschlüssig in Bezug auf die Ebene senkrecht zur Längsachse 7 des Stiftes 3 ein Abstreifelement 43 angeordnet, das an dem Stift 3 und dem Niederhalterelement 27 anliegt und vorzugsweise aus keramischem Material gebildet ist. Das Abstreifelement 43 ist vorgesehen, um plastifiziertes Material, welches an der Umfangsfläche des Stifts 3 haftet, abzustreifen, wenn sich das Niederhalterelement 27 relativ gegenüber dem Stift 3 hin zu dem Eingriffsende 11 bewegt also das Eingriffsende 11 außer Eingriff mit der Oberfläche der Werkstückanordnung kommt. Zusätzlich dient das Abstreifelement 43 als Dichtung gegen ein Eindringen von plastifiziertem Material ins Innere des Werkzeugs während des Fügeprozesses.

Im entspannten Zustand des Federelements 37 ist der Stift 3 derart gegenüber der Klemmvorrichtung 5 angeordnet, dass das Eingriffsende 11 des Stiftes 3 in Richtung des Kopplungsendes 9 versetzt gegenüber der Ebene angeordnet ist, in der sich die Anlagefläche 33 erstreckt. Das Eingriffsende 11 und die Reibfläche 17 sind also im entspannten Zustand des Federelements 37 gegenüber der Anlagefläche 33 zurückversetzt, wie dies auch in Fig. 1 zu erkennen ist.

Auf diese Weise erhält das Federelement 37 bereits eine Vorspannung, d.h. das Niederhalterelement 27 drückt bereits mit einer gewissen Klemmkraft auf die Oberfläche der Werkstückanordnung, wenn es zum Eingriff des Stiftes 3 mit der Oberfläche der Werkstückanordnung kommt. Ein Verrutschen der Werkstücke aufgrund der durch die Drehbewegung des Stiftes 3 verursachten Schubkräfte zwischen den Werkstücken kann somit verhindert werden.

Das Reibschweißwerkzeug 1 kann wie folgt verwendet werden. Zunächst wird der Stift 3 mit seinem Kopplungsabschnitt 13 mit der Abtriebseinrichtung einer Werkzeugmaschine drehfest verbunden, wobei die Eingriffsaussparung 15 formschlüssig mit einem Element der Abtriebseinrichtung eingreift.

Danach wird das Reibschweißwerkzeug 1 derart an die Werkstückanordnung angesetzt, dass die Anlagefläche 33 des Niederhalterelements 27 fest an der Oberfläche der Werkstückanordnung anliegt, wobei der Stift 3 mit seinem Eingriffsende 11 zunächst aufgrund des Versatzes zwischen Eingriffsende 11 und Anlagefläche 33 beabstandet über dem Bereich der Werkstückanordnung angeordnet ist, an welchem die Schweißverbindung hergestellt werden soll.

Die Werkstückanordnung kann z.B. eines oder mehrere übereinander angeordnete oder überlappende plattenförmige Werkstücke aufweisen, die auf einer Unterlage aufliegen, sodass diese durch einen durch das Niederhalterelement 27 auf die Oberfläche des obersten Werkstücks aufgebauten Druck zusammengehalten bzw. zusammengeklemmt werden und somit in ihrer Position zu einander fixiert werden, ohne leicht verrutschen zu können.

Anschließend wird der Stift 3 durch die rotierende Abtriebseinrichtung der Werkzeugmaschine in Drehung versetzt. Der Stift 3 dreht sich also auch gegenüber der Klemmvorrichtung 5, wobei der Vorsprung 19 in dem Lagergehäuse 25 rotiert, da das Niederhalterelement 27 mit seiner Anlagefläche 33 bereits an der Oberfläche der Werkstückanordnung anliegt und somit nicht mitbewegt wird.

Nun wird die Abtriebseinrichtung und damit der Stift 3 in Richtung der Oberfläche der Werkstückanordnung bewegt, bis das Eingriffsende 11 des Stiftes 3 mit der Oberfläche der Werkstückanordnung eingreift. Bei dieser Bewegung wird das Gegenlager 21 von den die Linearführung bildenden Führungsstiften 35 gegenüber dem Niederhalterelement 27 zu diesem hin geführt und dreht sich nicht mit dem Stift 3 mit. Bei dieser Relativbewegung von Gegenlager und Niederhalterelement wird die das Federelement 37 bildende Schraubenfeder 39 vorgespannt, und diese Vorspannkraft wird an die Oberfläche der Werkstückanordnung weitergegeben.

Der Versatz des Eingriffsendes 11 des Stiftes 3 gegenüber der Ebene, in welcher die Anlagefläche 33 liegt, ebenso wie die Steifigkeit der Schraubenfeder 39 sollten derart abgestimmt sein, dass schon dann eine ausreichende Klemmkraft von dem Niederhalterelement 27 auf die Werkstückanordnung wirkt, wenn der Stift 3 mit seinem Eingriffsende 11 in Eingriff mit der Oberfläche der Werkstückanordnung kommt, sodass die Werkstücke nicht gegeneinander verrutschen können bzw. sich keine Spalten bilden können.

Das während des Eingriffs des Stiftes 3 mit der Oberfläche der Werkstückanordnung aufgeworfene plastifizierte Material kann von der Vertiefung 41 in der Anlagefläche 33 des Niederhalterelements 27 aufgenommen und in eine vorgegebene Form gebracht werden, die die Schweißpunkte einheitlich kennzeichnet. Ist das Material der Werkstücke ausreichend plastifiziert, um die erforderliche Verbindung herzustellen, so wird der Stift 3 in Richtung seines Kopplungsendes 9 von der Werkstückanordnung weg bewegt, wobei an dem Stift 3 haftendes plastifiziertes Material durch das Abstreifelement 43 von dem Stift 3 abgestreift und in die Vertiefung 41 gelenkt wird. Das Abstreifelement 43 dient dabei auch als Dichtung.

Wie sich aus der vorstehenden Beschreibung des ersten Ausführungsbeispiels der vorliegenden Erfindung ergibt, kann das erfindungsgemäße Reibschweißwerkzeug 1 über das Kopplungsende 11 in einfacher Weise beispielsweise an eine Abtriebswelle einer herkömmlichen Werkzeugmaschine oder eines herkömmlichen Roboters montiert werden, ohne dass es erforderlich ist, zusätzliche Klemmvorrichtungen vorzusehen.

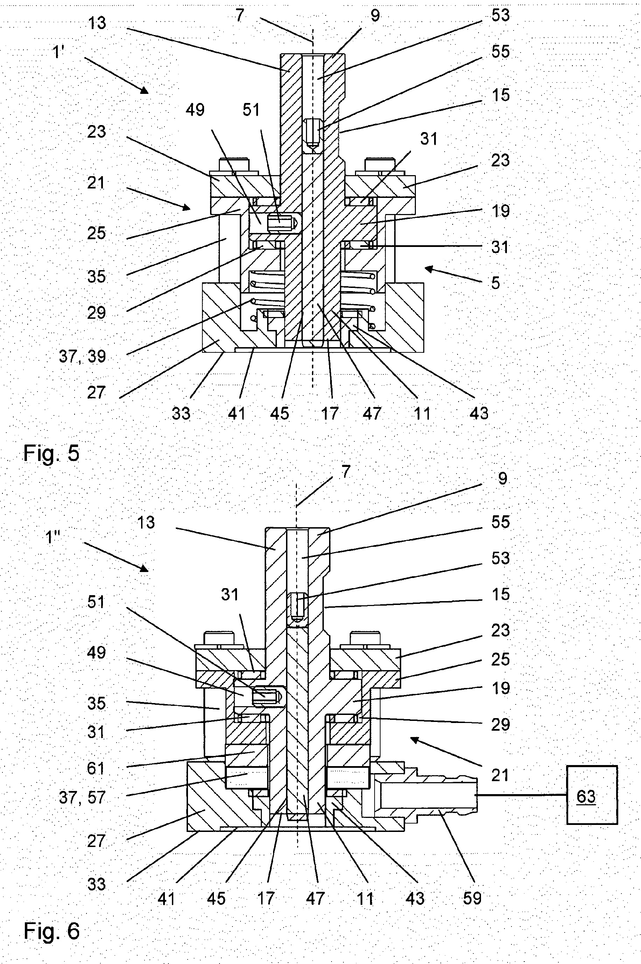

In Fig. 5 ist ein zweites Ausführungsbeispiel eines erfindungsgemäßen Reibschweißwerkzeugs 1' gezeigt, wobei zu dem ersten Ausführungsbeispiel identische Teile mit denselben Bezugszeichen versehen sind.

Das zweite Ausführungsbeispiel eines Reibschweißwerkzeugs 1' weist, wie das erste Ausführungsbeispiel auch, einen zu dessen Längsachse 7 im Wesentlichen rotationssymmetrischen Stift 3 mit einem sich in radialer Richtung zur Längsachse 7 erstreckenden Vorsprung 19 auf. Der Vorsprung 19 greift ebenfalls mit einer Aussparung 29 in einem Lagergehäuse 25 des Gegenlagers 21 ein, sodass der Stift drehbar, aber in axialer Richtung der Längsachse 7 unverschiebbar in dem Gegenlager 21 gehaltert ist, wobei wiederum Lagerelemente 31 vorgesehen sind, die eine spielfreie Drehbewegung sicherstellen.

Auch bei diesem Ausführungsbeispiel ist ein Niederhalterelement 27 über eine aus Führungsstiften 35 gebildete Linearführung in Richtung der Längsachse 7 verschiebbar am Gegenlager 21 gehaltert, wobei das Niederhalterelement 27 eine Anlagefläche 33 mit einer darin vorgesehenen Vertiefung 41 aufweist. Zwischen dem Niederhalterelement 27 und dem Gegenlager 21 ist außerdem ein Federelement 37 in Form einer Schraubenfeder 39 vorgesehen.

Der Stift weist einerseits ein Kopplungsende 9 mit einem Kopplungsabschnitt 13 und einer darin vorgesehenen Eingriffsaussparung 15 auf, sodass der Kopplungsabschnitt 13 an einer drehend angetriebenen Abtriebseinrichtung aufgenommen werden kann. Das von dem Kopplungsende 9 entfernt liegende Eingriffsende 11 ist mit einer Reibfläche 17 versehen, die in diesem bevorzugten Ausführungsbeispiel jedoch eine sich in axialer Richtung parallel zu der Längsachse 7 des Stifts 3 erstreckende Bohrung 45 aufweist. In der Bohrung 45 ist ein sich über die Reibfläche 17 hinaus erstreckender Reibstift 47 aufgenommen, der dann, wenn das Eingriffsende 11 in Eingriff mit der Oberfläche einer Werkstückanordnung gelangt, in diese eindringt.

Des Weiteren ist in dem Stift 3 des zweiten Ausführungsbeispiels eines Reibschweißwerkzeugs 1' im Bereich des Vorsprungs 19 eine sich radial zur Längsachse 7 des Stifts 3 erstreckende Gewindebohrung 49 vorgesehen, in der eine Feststellschraube 51 aufgenommen ist, die dazu dient, den Reibstift 47 drehfest gegenüber dem Stift 3 festzulegen.

Außerdem ist in dem Stift 3 vom Kopplungsende 9 her eine Verstellgewindebohrung 53 ausgebildet, in der eine Verstellschraube 55 aufgenommen ist. Die Verstellschraube 55 bildet den rückwärtigen Anschlag für den Reibstift 47, sodass über die Position der Verstellschraube 55 das Maß eingestellt werden kann, in dem der Reibstift 47 über die Reibfläche 17 vorsteht. Der Reibstift 47 kann entlang seines Umfangs eine strukturierte Oberfläche aufweisen, um eine effektivere Reibwirkung zu erzielen und somit das Material schneller und stärker zu plastifizieren.

Wie auch bei dem ersten Ausführungsbeispiel, weist das zweite Ausführungsbeispiel ein den Stift 3 formschlüssig umgebendes Abstreifelement 43 auf.

Das zweite Ausführungsbeispiel eines Reibschweißwerkzeugs 1' kann in ähnlicher Weise verwendet werden wie das erste Ausführungsbeispiel, wobei lediglich der Unterschied besteht, dass der Reibstift 47 in das Material der Werkstücke der Werkstückanordnung eindringt, sodass mittels eines Reibrührschweißverfahrens u.a. auch Stumpfstoß- oder Überlappverbindungen hergestellt werden können, wobei das Material des Werkstücks/der Werkstücke bis in eine größere Tiefe plastifiziert wird.

In jedem Fall besteht aber auch bei diesem Ausführungsbeispiel der Vorteil, dass das Reibschweißwerkzeug 1' in einfacher Weise an die Abtriebseinrichtung einer Werkzeugmaschine gekoppelt werden kann, wobei es nicht erforderlich ist, eine zusätzliche Klemmvorrichtung an der Werkzeugmaschine vorzusehen.

Schließlich ist in Fig. 6 ein drittes Ausführungsbeispiel eines erfindungsgemäßen Reibschweißwerkzeugs 1" dargestellt, das sich von dem zweiten Ausführungsbeispiel in der Ausgestaltung des Federelements 37 unterscheidet, ansonsten aber ähnlich aufgebaut ist, sodass identische Bauelemente mit denselben Bezugszeichen bezeichnet sind.

Während bei den ersten beiden Ausführungsbeispielen das Federelement 37 als Schraubenfeder 39 ausgebildet war, ist im dritten Ausführungsbeispiel des erfindungsgemäßen Reibschweißwerkzeugs 1" das Federelement 37 in der Weise aufgebaut, dass das Niederhalterelement 27 ein geschlossenes ringförmiges Volumen 57 aufweist, dessen Abmessung in Richtung der Längsachse 7 veränderbar ist und in das ein Fluid über einen Druckanschlussflansch 59 eingeleitet werden kann. Die Veränderbarkeit in Richtung der Längsachse 7 des ringförmigen Volumens 57 ergibt sich dadurch, dass das Volumen 57 durch eine Aussparung in dem Niederhalterelement 27 ausgebildet ist, in die sich teilweise ein Ringelement 61 am Lagergehäuse 25 erstreckt, sodass das ringförmige Volumen 57 durch das Niederhalterelement 27, das Ringelement 61, den Stift 3 und das Abstreifelement 43 vollständig umgeben und damit geschlossen ist.

Das ringförmige Volumen 57 steht dabei mit einer steuerbaren Druckquelle 63 in Fluidverbindung, wobei das Fluid in steuerbarer Weise mit einem Druck beaufschlagt werden kann. Dadurch kann die Federkraft, die zwischen dem Niederhalterelement 27 und dem Gegenlager 21 wirkt, über den Druck des Fluids in dem ringförmigen Volumen gesteuert werden. So ist es beispielsweise möglich, die über das Federelement 37 aufgebrachte Anpresskraft während des Schweißprozesses in der erforderlichen Weise einzustellen. Dies kann beispielsweise derart erfolgen, dass die Anpresskraft am Anfang, wenn das Material des Werkstücks/der Werkstücke noch nicht plastifiziert ist, besonders hoch ist und dann mit zunehmender Plastifizierung und Aufweichung des Materials abnimmt.

Während in den zuvor beschriebenen Ausführungsbeispielen für das Federelement 37 eine Schraubenfeder 39 oder ein mit einem unter Druck stehenden Fluid gefülltes ringförmiges Volumen 57 verwendet wurden, ist es genauso denkbar, dass stattdessen beispielsweise ein Ring aus einem elastischen Material oder eine Anordnung mehrerer Federelemente eingesetzt wird, wobei die Erfindung nicht auf diese zuvor genannten Möglichkeiten beschränkt ist.

## Patentansprüche

1. Reibschweißwerkzeug (1)
mit einem Stift (3), der ein Kopplungsende (9) und ein dem Kopplungsende (9) gegenüberliegendes Eingriffsende (11) aufweist und der vorgesehen ist, um eine Drehbewegung um seine zwischen dem Kopplungsende (9) und dem Eingriffsende (11) verlaufende Längsachse (7) auszuführen und dabei mit seinem Eingriffsende (11) mit der Oberfläche einer Werkstückanordnung einzugreifen, und
mit einer Klemmvorrichtung (5), die den Stift (3) umgibt, entlang der Längsachse (7) des Stiftes (3) beweglich ist und vorgesehen ist, um Druck auf die Oberfläche der Werkstückanordnung auszuüben,
wobei die Klemmvorrichtung (5) ein Gegenlager (21) aufweist,
wobei die Klemmvorrichtung (5) ein den Stift (3) umgebendes, auf der zu dem Eingriffsende (11) weisenden Seite des Gegenlagers (21) angeordnetes Niederhalterelement (27) mit einer Anlagefläche (33) aufweist, die zur Anlage an die Werkstückanordnung vorgesehen ist, und
wobei zwischen Niederhalterelement (27) und dem Gegenlager (21) ein Federelement (37) vorgesehen ist, sodass das Niederhalterelement (27) elastisch verschiebbar entlang der Längsachse (7) des Stiftes (3) an dem Stift (3) gelagert ist,
**dadurch gekennzeichnet,**
**dass** das Gegenlager (21) zwischen dem Kopplungsende (9) und dem Eingriffsende (11) frei drehbar um die Längsachse (7) des Stiftes (3) und in Richtung der Längsachse (7) unverschiebbar an dem Stift (3) gehaltert ist, und
**dass** der Stift (3) an seinem Kopplungsende (9) einen Kopplungsabschnitt (13) zur lösbaren drehfesten Kopplung an eine drehende Abtriebseinrichtung einer Werkzeugmaschine aufweist.

2. Reibschweißwerkzeug nach Anspruch 1, **dadurch gekennzeichnet, dass** das Eingriffsende (11) eine senkrecht zur Längsachse (7) verlaufende Reibfläche (17) aufweist.

3. Reibschweißwerkzeug nach Anspruch 1 oder 2, **dadurch gekennzeichnet, dass** das Eingriffsende (11) einen sich in Richtung der Längsachse (7) erstreckenden Reibstift (47) aufweist.

4. Reibschweißwerkzeug nach Anspruch 3, **dadurch gekennzeichnet, dass** das Eingriffsende (11) eine in Richtung der Längsachse (7) verlaufende Bohrung (45) aufweist und
dass der Reibstift (47) in der Bohrung (45) verschiebbar aufgenommen ist.

5. Reibschweißwerkzeug nach Anspruch 4, **dadurch gekennzeichnet, dass** der Stift (3) eine quer zur Längsachse (7) verlaufende Gewindebohrung (49) aufweist, die in die Bohrung (45) mündet und in die eine Feststellschraube (51) eingeschraubt ist.

6. Reibschweißwerkzeug nach Anspruch 4 oder 5, **dadurch gekennzeichnet, dass** der Stift (3) eine in Richtung der Längsachse (7) verlaufende, von dem Kopplungsende (9) ausgehende und in die Bohrung (45) mündende Verstellgewindebohrung (55) aufweist, in die eine Verstellschraube (53) eingeschraubt ist.

7. Reibschweißwerkzeug nach einem der Ansprüche 1 bis 6, **dadurch gekennzeichnet, dass** das Federelement (37) als Schraubenfeder (39) ausgebildet ist.

8. Reibschweißwerkzeug nach einem der Ansprüche 1 bis 6, **dadurch gekennzeichnet, dass** das Federelement (37) ein ringförmiges Volumen (57) aufweist, dessen Abmessung in Richtung der Längsachse (7) veränderbar ist, und
dass das Volumen (51) mit einer steuerbaren Druckquelle (63) in Fluidverbindung steht.

9. Reibschweißwerkzeug nach einem der Ansprüche 1 bis 8, **dadurch gekennzeichnet,**
**dass** der Stift (3) einen radialen umlaufenden Vorsprung (19) aufweist,
**dass** das Gegenlager (21) ein Lagergehäuse (25) mit einer radialen umlaufenden Aussparung (29) aufweist, wobei die Aussparung (29) mit dem Vorsprung (19) des Stiftes (3) eingreift, sodass eine freie Drehbewegung des Stiftes (3) um dessen Längsachse (7) gegenüber dem Gegenlager (21) möglich ist und eine axiale Bewegung des Stiftes (3) entlang dessen Längsachse (7) gegenüber dem Gegenlager (21) verhindert wird.

10. Reibschweißwerkzeug nach Anspruch 9, **dadurch gekennzeichnet, dass** das Federelement (37) zwischen dem Niederhalterelement (27) und dem Lagergehäuse (25) vorgesehen ist und
dass das Gegenlager (21) eine Linearführung (35) aufweist, die mit dem Niederhalterelement (27) eingreift, sodass das Niederhalterelement (27) entlang der Längsachse (7) des Stiftes (3) gegenüber dem Gegenlager (25) geführt verschiebbar ist.

11. Reibschweißwerkzeug nach Anspruch 9 oder 10, **dadurch gekennzeichnet, dass** zwischen dem Vorsprung (19) des Stiftes (3) und dem Lagergehäuse (25) Lagerelemente (31) vorgesehen sind.

12. Reibschweißwerkzeug nach einem der Ansprüche 1 bis 11, **dadurch gekennzeichnet, dass** die Anlagefläche (33) des Niederhalterelements (27) eine konzentrisch um die Längsachse (7) des Stiftes (3) angeordnete Vertiefung (41) zur Aufnahme von plastifiziertem Material aufweist.

13. Reibschweißwerkzeug nach einem der Ansprüche 1 bis 12, **dadurch gekennzeichnet, dass** zwischen Stift (3) und Niederhalterelement (27) formschlüssig in Bezug auf die Ebene senkrecht zur Längsachse (7) des Stiftes (3) an diesen anliegend ein Abstreifelement (43), vorzugsweise ein Keramikelement, angeordnet ist.

14. Reibschweißwerkzeug nach einem der Ansprüche 1 bis 13, **dadurch gekennzeichnet, dass** der Stift (3) im entspannten Zustand des Federelements (37) derart gegenüber der Klemmvorrichtung (5) angeordnet ist, dass das Eingriffsende (11) in Richtung des Kopplungsendes (9) versetzt gegenüber der Ebene angeordnet ist, in welcher die Anlagefläche (33) liegt.

## Claims

1. A friction welding tool (1)
having a pin (3), which has a coupling end (9) and an engagement end (11) lying opposite the coupling end (9) and which is provided for executing a rotary motion about its longitudinal axis (7), said longitudinal axis extending between the coupling end (9) and the engagement end (11), and, at the same time, for engaging by means of its engagement end (11) with the surface of a workpiece arrangement, and
having a clamping device (5), which surrounds the pin (3), can be moved along the longitudinal axis (7) of the pin (3) and is provided for exerting pressure on the surface of the workpiece arrangement,
wherein the clamping device (5) has a counter bearing (21),
wherein the clamping device (5) has a holddown element (27), which surrounds the pin (3), is arranged on the side of the counter bearing (21) facing the engagement end (11) and has a bearing surface (33), which is provided for bearing on the workpiece arrangement, and
wherein a spring element (37) is provided between the holddown element (27) and the counter bearing (21), and the holddown element (27) is thus mounted on the pin (3) in such a way that it is elastically slidable along the longitudinal axis (7) of the pin (3),
**characterized in that**
the counter bearing (21) is held on the pin (3) between the coupling end (9) and the engagement end (11) in a manner which allows it to be rotated freely around the longitudinal axis (7) of the pin (3) and prevents it from being moved in the direction of the longitudinal axis (7), and
on its coupling end (9), the pin (3) has a coupling section (13) for releasable, rotationally fixed coupling to a rotating output device of a machine tool.

2. The friction welding tool as claimed in claim 1, **characterized in that** the engagement end (11) has a friction surface (17) extending perpendicularly to the longitudinal axis (7).

3. The friction welding tool as claimed in claim 1 or 2, **characterized in that** the engagement end (11) has a friction pin (47) extending in the direction of the longitudinal axis (7).

4. The friction welding tool as claimed in claim 3, **characterized in that** the engagement end (11) has a hole (45) extending in the direction of the longitudinal axis (7), and
the friction pin (47) is accommodated in a slidable manner in the hole (45).

5. The friction welding tool as claimed in claim 4, **characterized in that** the pin (3) has a threaded hole (49), which extends transversely to the longitudinal axis (7) and opens into the hole (45) and into which a fixing screw (51) is screwed.

6. The friction welding tool as claimed in claim 4 or 5, **characterized in that** the pin (3) has a threaded adjustment hole (55), which extends in the direction of the longitudinal axis (7), starts from the coupling end (9), opens into the hole (45) and into which an adjusting screw (53) is screwed.

7. The friction welding tool as claimed in one of claims 1 to 6, **characterized in that** the spring element (37) is designed as a helical spring (39).

8. The friction welding tool as claimed in one of claims 1 to 6, **characterized in that** the spring element (37) has an annular volume (57), the dimension of which in the direction of the longitudinal axis (7) is variable, and
the volume (51) is in fluid communication with a controllable pressure source (63).

9. The friction welding tool as claimed in one of claims 1 to 8, **characterized in that**
the pin (3) has an encircling radial projection (19),
the counter bearing (21) has a bearing housing (25) with an encircling radial recess (29), the recess (29) engaging with the projection (19) of the pin (3), so that a free rotary motion of the pin (3) about its longitudinal axis (7) relative to the counter bearing (21) is possible and an axial movement of the pin (3) along its longitudinal axis (7) relative to the counter bearing (21) is prevented.

10. The friction welding tool as claimed in claim 9, **characterized in that** the spring element (37) is provided between the holddown element (27) and the bearing housing (25), and
the counter bearing (21) has a linear guide (35), which engages with the holddown element (27), so that the holddown element (27) is slidable in a guided manner along the longitudinal axis (7) of the pin (3), relative to the counter bearing (25).

11. The friction welding tool as claimed in claim 9 or 10, **characterized in that** bearing elements (31) are provided between the projection (19) of the pin (3) and the bearing housing (25).

12. The friction welding tool as claimed in one of claims 1 to 11, **characterized in that** the bearing surface (33) of the holddown element (27) has a recess (41), which is arranged concentrically around the longitudinal axis (7) of the pin (3) for receiving plasticized material.

13. The friction welding tool as claimed in one of claims 1 to 12, **characterized in that** a stripper element (43), preferably a ceramic element, is arranged between the pin (3) and the holddown element (27), resting on the pin (3) with positive engagement in relation to the plane perpendicular to the longitudinal axis (7) of the pin (3).

14. The friction welding tool as claimed in one of claims 1 to 13, **characterized in that**, in the relaxed state of the spring element (37), the pin (3) is arranged relative to the clamping device (5) in such a way that the engagement end (11) is arranged offset in the direction of the coupling end (9), relative to the plane in which the bearing surface (33) lies.

## Revendications

1. Outil de soudage par friction (1),
comprenant une broche (3) qui présente une extrémité d'accouplement (9) et une extrémité de contact (11), située à l'opposé de l'extrémité d'accouplement (9), et qui est prévue pour effectuer un mouvement de rotation autour de son axe longitudinal (7) s'étendant entre l'extrémité d'accouplement (9) et l'extrémité de contact (11) et pour entrer ainsi en prise par son extrémité de contact (11) avec la surface d'un agencement de pièce à travailler, et
comprenant un dispositif de serrage (5) qui entoure la broche (3), peut être déplacé le long de l'axe longitudinal (7) de la broche (3) et est prévu pour exercer une pression sur la surface de l'agencement de pièce à travailler,
le dispositif de serrage (5) présentant un contre-appui (21),
le dispositif de serrage (5) présentant un élément de retenue (27) qui entoure la broche (3), est placé sur le côté du contre-appui (21) tourné vers l'extrémité de contact (11) et est doté d'une surface d'appui (33) qui est prévue pour venir en appui contre l'agencement de pièce à travailler, et
un élément faisant ressort (37) étant prévu entre l'élément de retenue (27) et le contre-appui (21), de sorte que l'élément de retenue (27) est monté sur la broche (3) avec possibilité de déplacement élastique le long de l'axe longitudinal (7) de la broche (3),
**caractérisé en ce que**
le contre-appui (21) est tenu sur la broche (3), entre l'extrémité d'accouplement (9) et l'extrémité de contact (11), avec possibilité de libre rotation autour de l'axe longitudinal (7) de la broche (3) et en étant immobilisé dans le sens de l'axe longitudinal (7), et
**en ce que** la broche (3) présente à son extrémité d'accouplement (9) une partie d'accouplement (13) destinée à l'accouplement solidaire en rotation, libérable, avec un dispositif de sortie tournant d'une machine-outil.

2. Outil de soudage par friction selon la revendication 1, **caractérisé en ce que** l'extrémité de contact (11) présente une surface de friction (17) s'étendant perpendiculairement à l'axe longitudinal (7).

3. Outil de soudage par friction selon la revendication 1 ou 2, **caractérisé en ce que** l'extrémité de contact (11) présente une tige de friction (47) s'étendant dans le sens de l'axe longitudinal (7).

4. Outil de soudage par friction selon la revendication 3, **caractérisé en ce que** l'extrémité de contact (11) présente un alésage (45) s'étendant dans le sens de l'axe longitudinal (7), et **en ce que** la tige de friction (47) est logée avec possibilité de déplacement dans l'alésage (45).

5. Outil de soudage par friction selon la revendication 4, **caractérisé en ce que** la broche (3) présente un taraudage (49) qui s'étend transversalement à l'axe longitudinal (7) et qui débouche dans l'alésage (45) et dans lequel est vissée une vis de blocage (51).

6. Outil de soudage par friction selon la revendication 4 ou 5, **caractérisé en ce que** la broche (3) présente un taraudage de réglage (55), s'étendant dans le sens de l'axe longitudinal (7), qui part de l'extrémité d'accouplement (9) et débouche dans l'alésage (45) et dans lequel est vissée une vis de réglage (53).

7. Outil de soudage par friction selon l'une des revendications 1 à 6, **caractérisé en ce que** l'élément faisant ressort (37) est réalisé sous forme de ressort hélicoïdal (39).

8. Outil de soudage par friction selon l'une des revendications 1 à 6, **caractérisé en ce que** l'élément faisant ressort (37) présente un volume annulaire (57) dont la dimension dans le sens de l'axe longitudinal (7) peut être modifiée, et
**en ce que** le volume (51) est en communication de fluide avec une source de pression (63) contrôlable.

9. Outil de soudage par friction selon l'une des revendications 1 à 8, **caractérisé en ce que**
la broche (3) présente une saillie (19) périphérique radiale,
**en ce que** le contre-appui (21) présente un boîtier de support (25) doté d'un évidement (29) périphérique radial, l'évidement (29) étant en prise avec la saillie (19) de la broche (3), de façon à permettre un mouvement de libre rotation de la broche (3) autour de son axe longitudinal (7), par rapport au contre-appui (21), et à empêcher un mouvement axial de la broche (3) le long de son axe longitudinal (7), par rapport au contre-appui (21).

10. Outil de soudage par friction selon la revendication 9, **caractérisé en ce que** l'élément faisant ressort (37) est prévu entre l'élément de retenue (27) et le boîtier de support (25), et
**en ce que** le contre-appui (21) présente un guide linéaire (35) qui est en prise avec l'élément de retenue (27), de sorte que l'élément de retenue (27) peut être déplacé le long de l'axe longitudinal (7) de la broche (3), en étant guidé par rapport au contre-appui (25).

11. Outil de soudage par friction selon la revendication 9 ou 10, **caractérisé en ce que** des éléments de support (31) sont prévus entre la saillie (19) de la broche (3) et le boîtier de support (25).

12. Outil de soudage par friction selon l'une des revendications 1 à 11, **caractérisé en ce que** la surface d'appui (33) de l'élément de retenue (27) présente une partie en retrait (41) disposée de façon concentrique autour de l'axe longitudinal (7) de la broche (3), en vue de recevoir de la matière plastifiée.

13. Outil de soudage par friction selon l'une des revendications 1 à 12, **caractérisé en ce qu'**un élément racleur (43), de préférence un élément en céramique, est disposé entre la broche (3) et l'élément de retenue (27), en étant en appui contre la broche, avec complémentarité de forme par rapport au plan perpendiculaire à l'axe longitudinal (7) de la broche (3).

14. Outil de soudage par friction selon l'une des revendications 1 à 13, **caractérisé en ce que**, à l'état détendu de l'élément faisant ressort (37), la broche (3) est disposée par rapport au dispositif de serrage (5) de manière telle que l'extrémité de contact (11) soit décalée en direction de l'extrémité d'accouplement (9), par rapport au plan dans lequel se situe la surface d'appui (33).
